(19) Europäisches Patentamt
European Patent Office
Office européen des brevets

(11) **EP 3 626 530 B1**

(12) **FASCICULE DE BREVET EUROPEEN**

(45) Date de publication et mention
de la délivrance du brevet:
**23.03.2022 Bulletin 2022/12**

(21) Numéro de dépôt: **19198141.4**

(22) Date de dépôt: **18.09.2019**

(51) Classification Internationale des Brevets (IPC):
***B60P 1/48*** *(2006.01)*

(52) Classification Coopérative des Brevets (CPC):
**B60P 1/483**

(54) **SYSTÈME DE MANOEUVRE D'UN DISPOSITIF DE MANUTENTION DESTINÉ À ÉQUIPER LE CHÂSSIS D'UN VÉHICULE POUR LE CHARGEMENT ET LE DÉCHARGEMENT D'UNE CAISSE**

MANÖVRIERSYSTEM EINER FÖRDERVORRICHTUNG, DIE FÜR DIE AUSSTATTUNG EINES FAHRGESTELLS EINES FAHRZEUGS ZUR BELADUNG UND ENTLADUNG EINER KISTE BESTIMMT IST

SYSTEM FOR OPERATING A HANDLING DEVICE INTENDED FOR EQUIPPING THE FRAME OF A VEHICLE FOR LOADING AND UNLOADING A VEHICLE BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2018 FR 1858442**

(43) Date de publication de la demande:
**25.03.2020 Bulletin 2020/13**

(73) Titulaire: **GUIMA PALFINGER**
**82300 Caussade (FR)**

(72) Inventeurs:
• **RAUCOULES, Michel**
**82440 REALVILLE (FR)**
• **BOURDAIS, Guillaume**
**82000 MONTAUBAN (FR)**

(74) Mandataire: **Regimbeau**
**20, rue de Chazelles**
**75847 Paris Cedex 17 (FR)**

(56) Documents cités:
**EP-A1- 3 141 420        WO-A1-2017/108764**
**US-A1- 2011 196 623        US-A1- 2016 347 228**

EP 3 626 530 B1

**Description**

DOMAINE TECHNIQUE GENERAL ET ETAT DE LA TECHNIQUE

L'invention concerne le domaine des dispositifs de manutention équipant le châssis d'un véhicule pour le chargement et le déchargement d'une caisse amovible. De tels dispositifs sont connus par exemple de WO 2017/108764 A1, US 2011/196623 A1 et EP 3 141 420 A1.

Elle concerne plus particulièrement l'aide à la manoeuvre d'un tel dispositif au cours du chargement ou déchargement d'une caisse.

Un tel dispositif comprend un bras articulé sur le châssis d'un véhicule notamment d'un camion, le bras est terminé par un crochet disposé à son extrémité libre susceptible de coopérer avec un anneau solidaire de l'avant d'une caisse pour prendre cette caisse au sol et la déposer sur le châssis du véhicule et inversement prendre la caisse sur le châssis et le déposer sur le sol ou éventuellement sur une remorque.

Un tel dispositif est difficile à manœuvrer notamment lorsqu'il s'agit de récupérer une caisse, en raison du manque de visibilité vers l'arrière du véhicule et la nécessité d'aligner avec précision le crochet du bras par rapport à l'anneau de la caisse.

En outre, la manoeuvre d'un tel dispositif n'est pas sans risque pour le camion ou le bras lors des manoeuvres de chargement ou déchargement : risque de collision entre la caisse et l'arrière du camion, risque d'effort trop important entre la caisse et le camion etc.

PRESENTATION DE L'INVENTION

Au moins un but de l'invention est d'assister l'utilisateur lors de la manoeuvre ou bien d'automatiser la manœuvre d'un dispositif de manutention tel que présenté ci-dessus.

A ce titre, l'invention propose selon un premier aspect un système de manœuvre d'un dispositif de manutention destiné à équiper le châssis d'un véhicule pour le chargement et le déchargement d'une caisse ; ledit dispositif de manutention comprenant un bras constitué d'un faux-châssis, d'un châssis central articulé sur le faux-châssis et d'au moins un élément mobile lié directement ou indirectement au châssis central, un élément mobile étant pourvu à son extrémité libre d'un crochet adapté pour venir en prise avec un organe de préhension tel qu'un anneau solidaire de l'avant de la caisse, ledit système comprenant :

- un ensemble d'un ou plusieurs capteurs parmi un capteur angulaire et/ou un inclinomètre et/ou un capteur linéaire et/ou un capteur de position, le(s) capteur(s) étant configuré(s) pour effectuer respectivement une mesure d'angle et/ou d'inclinaison et/ou de course et/ou de position en continu au cours d'une manipulation du bras ;
- une unité de traitement configurée pour déterminer la position du crochet (20) en continu au cours de la manipulation du bras, à partir d'une ou plusieurs mesure(s) effectuée(s) par l'ensemble d'un ou plusieurs capteurs, la position du crochet correspondant à une position cartésienne du crochet dans un repère XOY, le repère XOY ayant comme axe des abscisses un axe horizontal orienté vers l'arrière du véhicule et comme axe des ordonnées un axe orienté vers le haut ;
- une mémoire non volatile adaptée pour stocker des caractéristiques d'au moins une zone d'intérêt définie dans le repère XOY ;

l'unité de traitement étant en outre configurée pour vérifier en continu au cours de la manipulation du bras si la position du crochet déterminée se trouve à l'intérieur de l'au moins une zone d'intérêt. Selon l'invention, la mémoire non volatile comprend les caractéristiques de deux zones correspondant à :

- une zone de ralentissement, dans laquelle la vitesse du crochet est destinée à être ralentie par rapport à une vitesse du crochet en dehors de ladite zone de ralentissement au cours d'une opération d'accrochage de la caisse par l'intermédiaire du crochet, l'unité de traitement étant configurée pour limiter la vitesse du crochet lorsque la position du crochet se situe dans la zone de ralentissement, et
- une zone d'arrêt, dans laquelle la vitesse du crochet est destinée à être nulle au cours d'une opération d'accrochage de la caisse par l'intermédiaire du crochet, l'unité de traitement étant configurée pour bloquer le bras lorsque la position du crochet se situe dans la zone d'arrêt.

L'invention est avantageusement complétée par les caractéristiques suivantes, prises seules ou en une quelconque de leur combinaison techniquement possible :

- la mémoire non volatile contient des caractéristiques d'une zone à risque de collision, dans laquelle la caisse ou le crochet a un risque de collision mécanique avec le camion ou le bras au cours de l'opération de chargement de la caisse ;

- au cours d'une opération chargement de la caisse, l'unité de traitement est configurée pour générer un signal indiquant que la position mesurée du crochet se situe à l'intérieur de la zone à risque de collision, le signal étant typiquement sonore ou visuel ;
- l'unité de traitement est configurée pour, lorsque la position du crochet se situe dans la zone à risque de collision au cours d'une opération chargement de la caisse :

  ◦ autoriser uniquement les mouvements du bras adaptés pour rapprocher le crochet d'une limite de la zone à risque de collision,
  ◦ interdire tout autre mouvement du bras;

- la mémoire non volatile contient les caractéristiques d'une zone à risque d'effort, dans laquelle il y a un risque d'effort trop important, c'est-à-dire susceptible de résulter en une casse matérielle, entre la caisse ou le crochet d'une part, et le camion ou le bras d'autre part, au cours d'une opération de déchargement de la caisse ;
- le système comprend une unité de mesure de la pression régnant dans au moins un vérin, et au cours d'une opération de déchargement de la caisse, l'unité de traitement est configurée pour générer un signal indiquant une surpression dans le vérin lorsque que la position mesurée du crochet se situe à l'intérieur de la zone à risque d'effort et que l'unité de mesure de la pression détecte une surpression dans le vérin, le signal étant typiquement sonore ou visuel ;
- l'unité de traitement est configurée pour interdire tout mouvement du bras en cas de surpression dans le vérin alors que la position mesurée du crochet se situe à l'intérieur de la zone à risque d'effort ;
- la mémoire non volatile contient les caractéristiques d'une zone d'ouverture de crochet, dans laquelle le crochet peut être ouvert sans risque de faire tomber la caisse au cours d'une opération de déchargement de la caisse ;
- l'unité de traitement est configurée pour piloter automatiquement l'ouverture du crochet lorsque la position mesurée du crochet au cours d'une opération de déchargement de la caisse se situe à l'intérieur de la zone d'ouverture de crochet ;
- le système est adapté pour piloter le bras au cours d'une opération de chargement de la caisse de manière à ce que le crochet suive une trajectoire optimale dépendant de la géométrie du bras et minimisant la distance avec la zone à risque de collision, l'unité de traitement étant en outre configurée pour commander le bras afin que le crochet suive ladite trajectoire optimale et pour vérifier que la position mesurée se situe en dehors et à distance minimale de la zone à risque de collision ;
- au cours d'une opération d'accrochage de la caisse, l'unité de traitement est configurée pour générer un signal indiquant que la position mesurée du crochet se situe à l'intérieur de la zone d'arrêt, le signal étant typiquement sonore ou visuel ;
- la zone de ralentissement s'étend tout autour de la zone d'arrêt, et l'unité de traitement est configurée pour piloter automatiquement le bras afin que le crochet atteigne la zone d'arrêt en passant par la zone de ralentissement ;
- le châssis central fait un angle a avec le faux-châssis, la potence faisant un angle b avec le châssis central, l'unité de traitement étant configurée pour déterminer la position Pc du crochet en fonction de l'angle a et de l'angle b, dans un repère XOY ayant comme axe X des abscisse un axe horizontal orienté vers l'arrière du véhicule et un axe Y des ordonnées orienté vers le haut, ladite position du crochet Pc=(Xc, Yc) étant dans ce repère :

$$Xc = L1 * \cos(a) + L2 * \cos(a + b) + X10$$

$$Yc = L1 * \sin(a) - L2 * \sin(a + b) + Y10$$

avec

  ◦ (X10, Y10) = Coordonnées de l'axe de rotation entre le châssis et le faux-châssis dans le repère ;
  ◦ (Xc,Yc) = Coordonnées du centre du crochet dans le repère ;
  ◦ L1 = longueur entre l'axe de rotation entre le châssis central et le faux-châssis et l'origine de l'angle b ;
  ◦ L2 = longueur entre l'origine de l'angle b et le centre du crochet ;

- le système comprend en outre une potence en deux parties, une première partie formant un ange c avec le châssis central et une deuxième partie formant un angle b avec la deuxième partie, la position du crochet Pc' étant fonction de l'angle a, l'angle b et l'angle c dans un repère XOY ayant comme axe X des abscisse un axe horizontal orienté vers l'arrière du véhicule et un axe Y des ordonnées orienté vers le haut, ladite position du crochet PC'=(Xc', Yc') étant dans ce repère

$$X_{C'} = L1' * \cos(a) - L1 * \cos(a + c) + L2 * \cos(a + b + c) + X10$$

$$Y_{C'} = L1' * \sin(a) - L1 * \sin(a + c) + L2 * \sin(a + b + c) + Y10$$

avec

  ◦ (X10, Y10) = Coordonnées de l'axe de rotation entre le châssis et le faux-châssis dans le repère ;
  ◦ = Coordonnées du centre du crochet dans le repère
  ◦ L1' = longueur entre l'axe de rotation entre le châssis central et le faux-châssis dans le repère et l'origine de l'angle c ;
  ◦ L1 = longueur entre les origines des angles c et b ;
  ◦ L2 = longueur entre l'origine de l'angle b et le centre du crochet.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- les figures 1 à 4 illustrent plusieurs configurations de bras de manutention pour lequel un système d'aide à la manoeuvre est implémenté.
- la figure 5 illustre un système d'aide à la manoeuvre conforme à l'invention ;
- les figures 6 et 7 illustrent les cinématiques des bras des figures 1 à 4 ;
- la figure 8 illustre des étapes mises en oeuvre par un système d'aide conforme à l'invention ;
- la figure 9 illustre un déplacement d'un bras de manutention dont la manoeuvre est aidée au moyen d'un système d'aide conforme à l'invention ;
- la figure 10 illustre des étapes mises en oeuvre par un système d'aide conforme à l'invention ;
- les figures 11 à 15 illustrent des zones d'intérêt d'un système d'aide à la manoeuvre conforme à l'invention.
- la figure 16 illustre des étapes mises en oeuvre par un système d'aide conforme à l'invention ;

Sur l'ensemble des figures, les éléments similaires portent des références identiques.

## DESCRIPTION DETAILLEE DE L'INVENTION

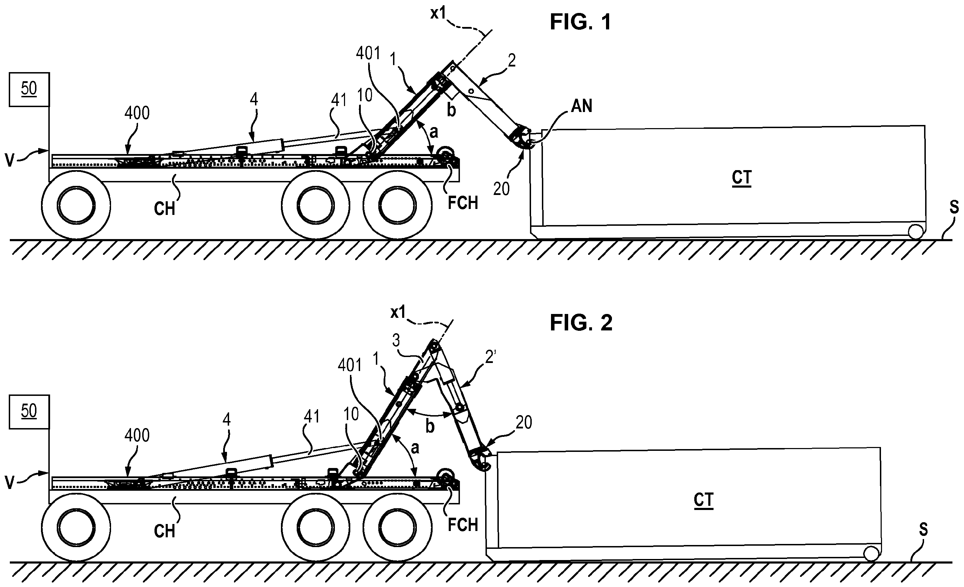

Dans ce qui suit, en relation avec les figures 1 à 4, on considère un véhicule V, constitué par un camion, dont le châssis CH supporte un faux-châssis FCH, un bras hydraulique constitué selon les cas de un à quatre éléments mobiles liés directement ou indirectement à un châssis central 1 supporté par le faux-châssis.

Sur la **figure 1**, le bras est en deux parties et comprend le châssis central 1 dont une extrémité est articulée autour d'un axe 10 au faux châssis FCH et dont l'autre extrémité est articulée à une potence 2.

La potence 2 est mobile par rapport au châssis central 1 selon une liaison glissière (non représentée), dans l'axe longitudinal x1 du châssis central 1, et la potence 2 fait toujours un angle fixe de 90° avec le châssis central 1. En outre, la potence 2 est pourvue à son extrémité libre d'un crochet 20 susceptible de coopérer avec un organe de préhension approprié tel qu'un anneau AN solidaire de l'avant d'un conteneur CT reposant sur une surface de préférence le sol S.

Le crochet 20 peut être un crochet pneumatique adapté pour être déplacé entre une position d'ouverture et une position de fermeture par un actionneur. Le crochet 20 est adapté pour pouvoir dans la position de fermeture être fixé sur l'organe de préhension de sorte que l'organe de préhension est solidaire du crochet, et pour pouvoir dans la position d'ouverture libérer l'organe de préhension.

Le châssis central 1 est articulé par rapport au faux-châssis FCH selon un angle a variable selon une liaison du type pivot transversal.

En outre, la distance relative selon l'axe x1 entre la potence 2 et le châssis central 1 est variable du fait de la liaison glissière entre ces deux éléments.

Sur la **figure 2**, le bras est en trois parties et comprend le châssis central 1 et une potence articulée 2' ainsi qu'une potence horizontale 3.

Comme pour la configuration de la figure 1, le châssis central 1 est articulé par rapport au faux-châssis FCH selon un angle a variable selon une liaison du type pivot transversal.

En outre, la potence horizontale 3 est mobile par rapport au châssis central 1 selon une liaison glissière (non représentées) dans l'axe longitudinal x1 du châssis central 1.

La potence horizontale 3 fait un angle b variable avec la potence articulée 2' selon une liaison du type pivot transversal.

A la différence avec la figure 1, l'angle b est dans cette configuration variable.

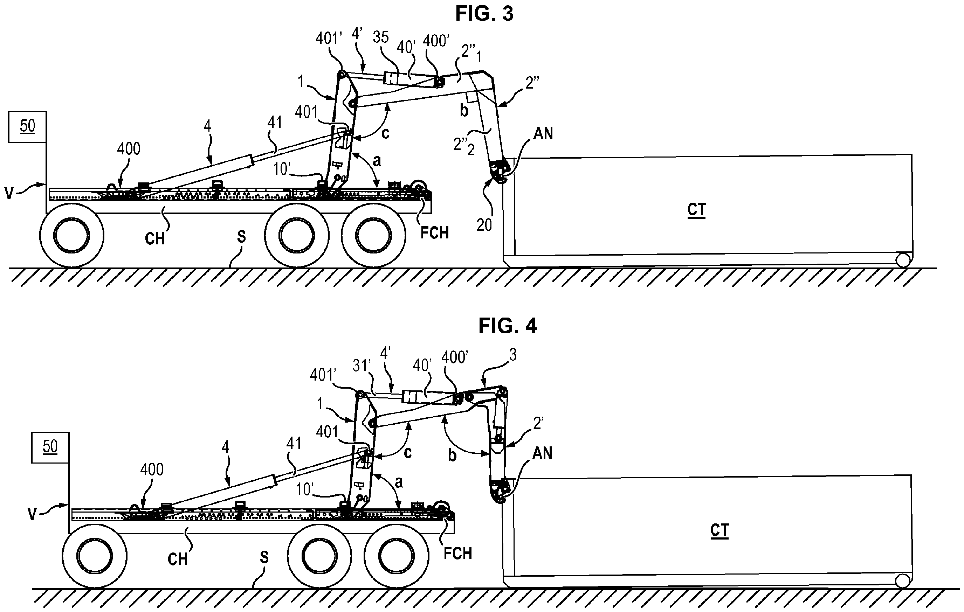

Sur la **figure 3**, le bras est en deux parties et comprend le châssis central 1 avec une potence 2'' qui possède une géométrie différente des potences des figures 1 et 2. Sur la figure 3, la potence 2'' est en forme de coude (elle comprend une première partie $2_1''$ et une deuxième partie $2_2''$ en angle droit avec la première partie $2_2'$) qui forme un angle c variable avec le châssis central 1.

La potence 2'' en forme de coude est articulée par rapport au châssis central 1.

Sur la **figure 4**, le bras est en trois parties et comprend le châssis central 1, une potence articulée 2' (identique à celle de la figure 2) et une potence horizontale 3. La potence articulée 2' forme un angle b variable avec la potence horizontale 3 et la potence horizontale 3 forme un angle c avec le châssis central.

Sur les configurations 1 et 2, la potence 2 et la potence horizontale 3 sont articulées par rapport au châssis central 1 au moyen d'un vérin à double effet (non représenté) situé à l'intérieur de la glissière. Le corps de ce vérin est articulé au châssis central 1. La tige de ce vérin est articulée à la potence ou à la potence horizontale 3.

Sur les configurations des figures 1 à 4, le châssis central 1 est articulé au faux châssis FCH au moyen d'une première paire de vérins 4 à double effet. Le corps 4 de ces vérins est articulé au faux châssis par un axe 400. En outre la tige 41 de ces vérins est articulée au châssis central par un axe 401.

Sur les configurations des figures 2 et 4, la potence 2 est articulée à la potence horizontale 3 au moyen d'un vérin à double effet. Le corps de ce vérin est articulé à la potence horizontale 3. La tige de ce vérin est articulée à la potence 2.

Sur les configurations des figures 3 et 4, la potence 2" en forme de coude ou bien la potence horizontale 3 sont articulées par rapport au châssis central 1 au moyen de un ou deux vérins 4' à double effet. Sur ces figures, la tige 4' de ces vérins est articulée au châssis central 1 par un axe 401'. En outre, le corps 40' de ce(s) vérin(s) est articulé à la potence 2" en forme de coude ou bien à la potence horizontal 3 par un axe 400'.

Afin d'aider à la manipulation d'un dispositif de manutention, tel que présenté ci-dessus, notamment au cours d'une phase d'accrochage de la caisse au bras et/ou au cours d'une phase de chargement et/ou de déchargement de la caisse accrochée sur le véhicule, un système de manoeuvre d'un dispositif de manutention est configuré pour coopérer avec un tel bras.

Le système de manœuvre peut permettre l'implémentation de fonctions d'assistance au pilotage manuel ou de pilotage automatique pour les opérations d'accrochage et/ou de chargement et/ou de déchargement de la caisse. Lors d'une assistance au pilotage manuel, les éléments du dispositif sont actionnés manuellement par un utilisateur. Lors d'un pilotage automatique, l'action d'un utilisateur n'est pas nécessitée pour les opérations d'accrochage et/ou de chargement et/ou de déchargement de la caisse.

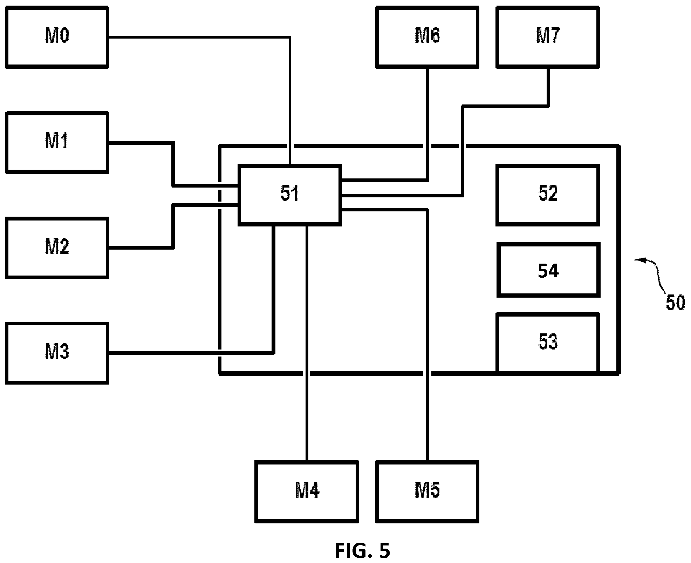

La **figure 5** illustre schématiquement un système 50 de manoeuvre d'un bras qui est de préférence disposé dans la cabine du camion ou sur le faux châssis de du bras. L'interface utilisateur de pilotage 53 est située de préférence en cabine ou bien à proximité des outils visant à manoeuvrer le dispositif de manutention.

Un tel système d'aide comprend notamment une unité 51 de traitement (par exemple un processeur) connectée à une ou plusieurs unité(s) de mesure M1, M2, M3, M4, M5, M6, M7 de différents paramètres caractéristiques d'une position du bras.

Le système comprend un ensemble d'un ou plusieurs capteurs parmi un capteur angulaire et/ou un inclinomètre et/ou un capteur linéaire et/ou un capteur de position, le(s) capteur(s) étant configuré(s) pour effectuer respectivement une mesure d'angle et/ou d'inclinaison et/ou de course et/ou de position en continu au cours d'une manipulation du bras.

Le système comprend, en outre une unité 52 de stockage de préférence non-volatile configurée pour mémoriser un certain nombre de paramètres utiles pour mettre en oeuvre le système de manoeuvre du bras. Par exemple, l'unité 52 de stockage peut mémoriser des coordonnées et des dimensions de zones définies, des dimensions d'éléments bras, du camion, d'au moins une caisse, etc.

L'unité 51 de traitement est notamment configurée pour mettre en œuvre un certain nombre d'étapes pour manoeuvrer le bras.

En outre, le système de manoeuvre peut comprendre une interface de réglage 54 utilisateur permettant à un opérateur ou à l'installateur du système d'entrer certains paramètres nécessaires à la configuration du système. Une telle interface de réglage 54 est par exemple constituée d'un clavier et d'un écran ainsi qu'éventuellement d'un haut-parleur.

Le bras est piloté manuellement par l'utilisateur via l'interface de pilotage 53, le système fournissant alors une assistance. En variante, le pilotage est automatique et nécessite uniquement un signal de lancement/arrêt par utilisateur via l'interface de pilotage 53. L'interface de pilotage 53 peut être sans fil ou avec fil. L'interface de pilotage 53 peut par exemple comprendre une unité de pilotage à distance sans fil, et/ou un joystick, et/ou un écran tactile, et/ou une manette et/ou des indicateurs sonores ou visuels (non représentés).

Comme cela va être détaillé, le système de manœuvre utilise la position mesurée du bras et/ou du crochet mesurée en continu au cours de la manipulation du bras.

Pour déterminer une telle position, le système de manœuvre utilise selon les cas des mesures des différents angles a, b, c fonction de la configuration du bras (voir ci-dessus), ainsi que la mesure de la course ou bien de la position de la glissière (figures 1 et 2). A ce titre, le système de manœuvre coopère, selon les cas, avec une première unité de mesure M1 configurée pour mesurer l'angle a, une deuxième unité de mesure M2 configurée pour mesurer l'angle b, une troisième unité de mesure M3 configurée pour mesurer l'angle c, une quatrième unité de mesure M4 (optionnelle) pour mesurer la course de la glissière ou une unité de mesure alternative M4' (optionnelle) pour mesurer la position de la glissière.

Dans le cas où cette unité de mesure M4 n'est pas présente, la glissière est maintenue fixe en position complètement rétractée dans le châssis central 1, lors des manœuvres de chargement et déchargement. On peut s'assurer alors que la glissière est complètement réfractée via le capteur de position M4' (optionnel). La course de la glissière et alors constante et de valeur connue.

En outre une cinquième unité de mesure M0 (optionnelle) permet de mesurer un angle de référence pour les autres unités de mesure. Cette cinquième unité de mesure M0 est donc disposée sur le châssis CH.

La première unité de mesure M1 et/ou la deuxième unité de mesure M2 et/ou la troisième unité mesure M3 et/ou la cinquième unité de mesure M0 sont par exemple des capteurs angulaires ou des inclinomètres. La quatrième unité de mesure M4 est par exemple un capteur linéaire qui permet de mesurer la course de la glissière dans le cas de la configuration de la figure 1 ou 2 (potence horizontale 3 mobile par rapport au châssis central 1 selon un axe longitudinal $x_2$ du châssis central 1). L'unité de mesure M5' est par exemple un capteur de position.

La cinquième unité de mesure M0 est surtout utilisée dans le cas où au moins un inclinomètre constitue une unité de mesure. Dans le cas d'utilisation de capteurs angulaires, l'unité de mesure M0 est optionnelle.

Dans le cas d'inclinomètres, les unités de mesures sont disposées sur tout ou partie des éléments suivants

- figure 1 : faux-châssis FCH et châssis central 1 ;
- figure 2 : faux châssis FCH, cassis central 1 et potence articulée 2' ;
- figure 3 : faux-châssis FCH, châssis central 1, potence 2'' en forme de coude ;
- figure 4 : faux-châssis FCH, châssis central 1, potence horizontale 3, potence articulée 2'.

Dans le cas de capteurs angulaires, les unités de mesures sont disposées sur tout ou partie des axes de rotation des éléments formant les différents angles à mesurer : par exemple l'axe 10 pour ce qui est de l'angle a.

En outre, les courses des différentes glissières (figures 1 et 2) sont mesurées par des capteurs linéaires. Dans ce cas, l'unité de mesure est disposée sur l'élément suivant : vérin à l'intérieur de la glissière, cela afin de mesurer la course de la glissière.

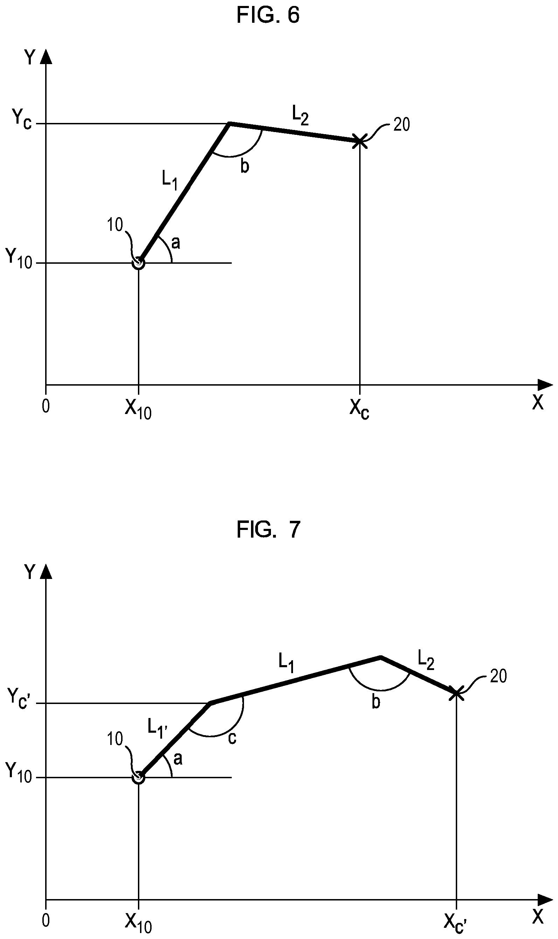

Dans le cas des figures 1 et 2 et comme illustré sur la **figure 6**, la position du crochet 20 à un instant donné est fonction de l'angle a et de l'angle b dans un repère XOY ayant comme axe X des abscisse un axe horizontal orienté vers l'arrière du véhicule et un axe Y des ordonnées orienté vers le haut.

La position du crochet correspond à la position cartésienne du crochet dans le repère XOY. Au cours de la manoeuvre, la position du crochet est donc variable dans les deux dimensions du repère XOY. La position du crochet est constante dans la troisième dimension, qui est la dimension transversale, orientée selon un axe Z perpendiculaire aux axes X et Y. En effet, les liaisons glissières sont disposés dans le repère XOY, et les liaisons pivot sont de type transversales. Ainsi, une modification de longueur via une liaison glissière et/ou d'angle via une liaison pivot entraîne une modification de la position cartésienne du crochet dans le repère XOY.

La position cartésienne du crochet dans le repère XOY est déterminée à partir de calculs trigonométriques effectués sur les valeurs de sortie des capteurs du système de manoeuvre, qui peuvent être par exemple des capteurs angulaires ou linéaires.

Le fait de déterminer la position du crochet dans un repère cartésien XOY permet à l'utilisateur de définir les zones d'intérêt (zone d'arrêt, zone de ralentissement, zone d'ouverture du crochet, zone à risque de collision, zone à risque d'effort) dans ce même repère cartésien. Une telle définition de zones d'intérêt serait très difficilement possible via un système qui ne ferait pas intervenir de calculs trigonométriques mais se contenterait des valeurs en sortie des capteurs.

Les calculs trigonométriques permettent de déterminer la position cartésienne du crochet à partir de la configuration des diverses articulations, liaisons glissières ou pivots, du bras de levage.

Dans ce repère XOY, la position du crochet Pc=(Xc, Yc) est :

$$Xc = L1 * \cos(a) + L2 * \cos(a + b) + X10$$

$$Yc = L1 * \sin(a) - L2 * \sin(a + b) + Y10$$

avec

- (X10, Y10) = Coordonnées de l'axe de rotation 10 dans le repère ;
- (Xc,Yc) = Coordonnées du centre du crochet dans le repère ;
- L1 = longueur entre l'axe de rotation 10 et l'origine de l'angle b (longueur qui correspond à la somme de la longueur du châssis central et de la longueur sortie de la potence 2 (fig1) ou de potence horizontale 3 (fig2)) ;
- L2 = longueur entre l'origine de l'angle b et le centre du crochet (longueur qui correspondant sensiblement à la longueur de la potence 2).

Dans le cas des figures 3 et 4 et comme illustré sur la **figure 7**, la position du crochet 20 à un instant donné est fonction de l'angle a, de l'angle b et de l'angle c dans un repère XOY ayant comme axe X des abscisse un axe horizontal orienté vers l'arrière du véhicule et un axe Y des ordonnées orienté vers le haut.

Dans ce repère la position du crochet PC'=(Xc', Yc') est

$$X_{C'} = L1' * \cos(a) - L1 * \cos(a + c) + L2 * \cos(a + b + c) + X10$$

$$Y_{C'} = L1' * \sin(a) - L1 * \sin(a + c) + L2 * \sin(a + b + c) + Y10$$

avec

- (X10, Y10) = coordonnées de l'axe de rotation 10 dans le repère XOY ;
- (Xc',Yc') = coordonnées du centre du crochet dans le repère
- L1' = longueur entre l'axe de rotation 10 et l'origine de l'angle c (longueur qui correspond à la longueur du châssis central 1) ;
- L1 = longueur entre les origines des angles c et b (longueur qui correspond à la longueur de première partie $2_1$" partie du coude de la potence 2" qui s'étend depuis le châssis central 1 sur la figure 3 ou bien à la longueur de la potence horizontale 3 sur la figure 4) ;
- L2 = longueur entre l'origine de l'angle b et le centre du crochet (longueur qui correspond sensiblement à la longueur de la deuxième partie $2_2$" la potence 2" qui s'étend vers le crochet sur la figure 3 ou bien à la longueur de la potence horizontale 3 sur la figure 4).

En variante, le système de manoeuvre peut utiliser, pour déterminer la trajectoire du crochet et/ou du bras, la course de sortie des vérins 4, 4', potence en mesurant notamment la sortie des tiges 41, 41, potence au moyen de quatrième, cinquième et sixième unités de mesure M5, M6, M7. Ces unités de mesures sont par exemple des capteurs de position linéaires disposés sur tout ou partie des éléments suivants : vérin 4/41, vérin 4'/40', vérin potence articulée

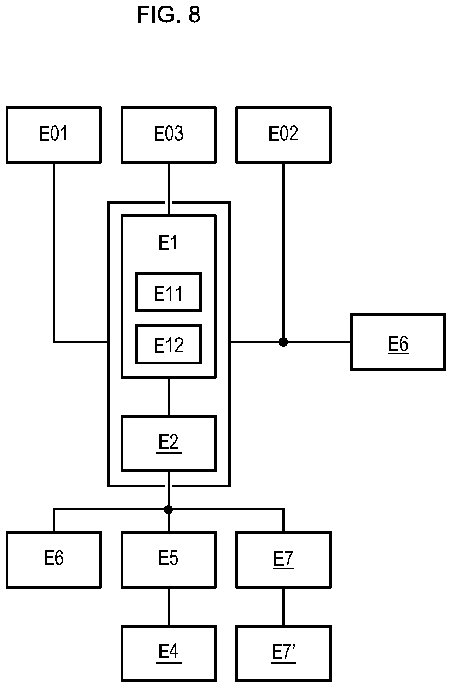

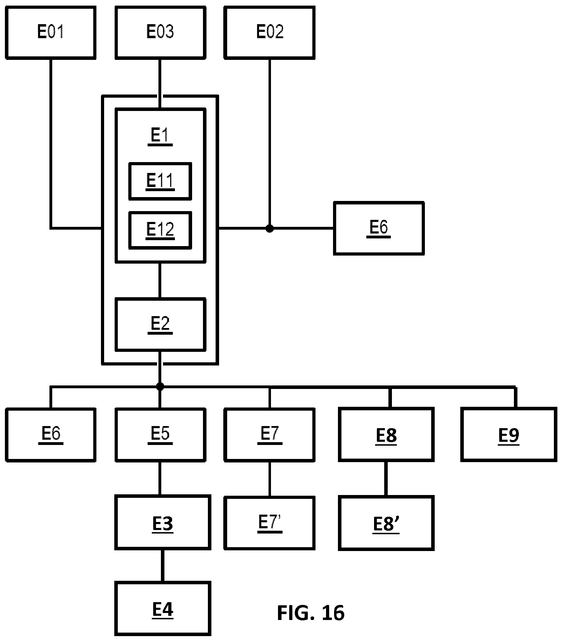

Selon plusieurs modes de réalisation qui vont être décrits en relation avec les **figures 8, 9, 10 et 16**, le système de manoeuvre va, au cours d'une manœuvre du bras déterminer (étape E1) à plusieurs instants au cours de cette manœuvre la position du crochet et vérifier (étape E2) si cette position se situe dans une zone d'intérêt. Les caractéristiques de la zone d'intérêt, telles que ses coordonnées et/ou ses dimensions, sont stockées dans une mémoire non volatile du système. Le système de manoeuvre peut déterminer la position cartésienne du crochet à plusieurs instants ponctuels, ou en continu lors de la manœuvre. La mémoire non volatile 52 est adaptée pour stocker des caractéristiques de l'au moins une zone d'intérêt définie dans le repère XOY ;

Une zone d'intérêt peut être une surface présentant diverses formes et dimensions. Une zone d'intérêt peut par exemple être en forme de polygone, d'ellipse ou de cercle. Une zone d'intérêt peut également être réduite à un point, la zone d'intérêt correspondant alors à une position cible. Les caractéristiques des zones d'intérêt, telles que leurs coordonnées et/ou leurs dimensions, par exemple les coordonnées des coins, les coordonnées des centres, les rayons, etc., sont également définies dans le repère XOY.

Ainsi, il est possible de définir une ou plusieurs zones d'intérêt différentes, telles que :

- une zone à risque de collision Zrc,

- une zone à risque d'effort Zre,
- une zone d'ouverture crochet Zoc,
- une zone de ralentissement Zr,
- une zone d'arrêt Za.

Selon un premier mode de réalisation, le système de manoeuvre permet d'aider à l'accrochage d'une caisse d'un véhicule. Le premier mode de réalisation peut permettre en particulier une assistance au pilotage manuel de l'accrochage d'une caisse sur le véhicule.

A ce titre, et donc afin d'aider à l'accrochage de la caisse, au cours d'une opération d'accrochage (au cours de laquelle un opérateur commande le bras), l'unité de traitement détermine (étape E1) la position du crochet 20.

La détermination de la position du crochet 20 est effectuée toutes les 5 ms à 250 ms, de préférence 50 ms au cours de l'opération d'accrochage.

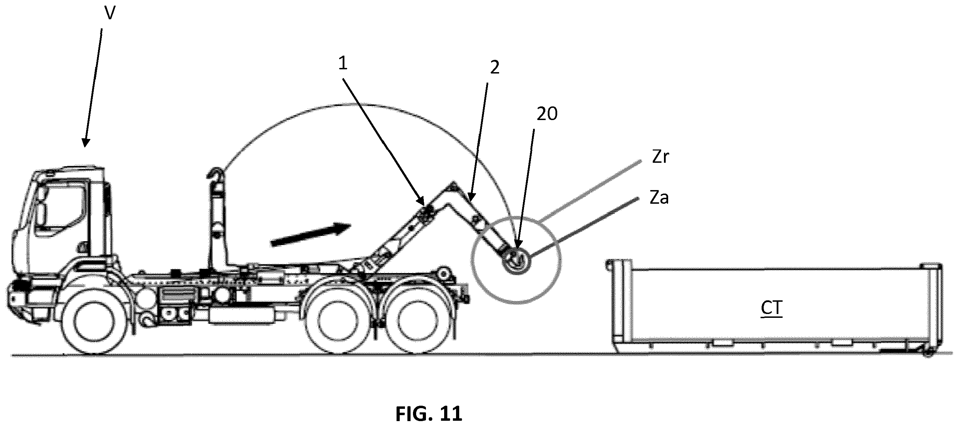

La position ainsi déterminée est vérifiée (étape E2) afin de voir si elle se trouve dans la zone de ralentissement Zr ou dans la zone d'arrêt Za. La vérification s'effectue pour chaque mesure de la position du crochet 20 donc à la même fréquence que celle de la détermination de la position Pc du crochet 20. L'unité de traitement est configurée pour vérifier au cours de l'opération si la position Pc du crochet 20 se situe dans la zone de ralentissement Zr ou dans la zone d'arrêt Za. Un exemple de zone d'arrêt Za et de zone de ralentissement Zr est illustré en figure 11.

Dans la zone de ralentissement Zr, la vitesse du crochet 20 est destinée à être plus faible qu'en dehors de ladite zone de ralentissement Zr. La zone de ralentissement Zr correspond à une zone de manoeuvre ralentie à proximité de la zone d'accrochage de la caisse.

Dans la zone d'arrêt Za, la vitesse du crochet 20 est destinée à être nulle. La zone d'arrêt Za correspond à une zone d'accrochage de la caisse par l'intermédiaire du crochet 20.

Les caractéristiques de ces zones de ralentissement Zr et d'arrêt Za sont stockées dans la mémoire non volatile 52 de l'unité de traitement.

En outre, les caractéristiques de ces zones sont de préférence paramétrées au cours d'une phase d'initialisation (étape E01). Les caractéristiques de ces zones de ralentissement Zr et d'arrêt Za dépendent de plusieurs paramètres :

- La hauteur de l'anneau de la caisse. Les paramètres relatifs à la caisse sont pour la plupart normalisés selon le pays : par exemple pour la norme française NFR 17-108 la hauteur de l'anneau de caisse est 1425 mm.
- La hauteur de l'essieu du camion sur lequel le bras est agencé. La hauteur de l'essieu étant en général variable car régulée par l'électronique du camion, le système peut être capable de commander la désactivation de cette régulation afin d'obtenir une hauteur fixe et connue ;
- La hauteur relative entre les roues du camion et le sol où est posée la caisse.

Ces paramètres peuvent être entrés manuellement par l'utilisateur ou bien être calculés par le système par apprentissage automatique. Par apprentissage automatique, l'utilisateur doit aligner manuellement le crochet et l'anneau de la caisse. Une fois la position d'alignement atteinte, l'utilisateur déclenche la mémorisation de cette position dans l'unité de stockage non volatile 52, sous forme d'une zone d'arrêt et d'une zone de ralentissement dont le centre est la position actuelle du crochet, qui correspond à la position de l'anneau de la caisse.

La phase d'initialisation a lieu une unique fois par type de caisse. En rappelant les paramètres mémorisés lors de cette phase, l'utilisateur peut réaliser des manoeuvres d'accrochage (étapes E1 - E2 - E5 - E3 - E4) pour le même type de caisse sans avoir à réinitialiser le système.

L'utilisateur doit pouvoir mémoriser ou sélectionner différentes zones d'arrêt dans le système, correspondantes à diverses configurations de caisse.

La vérification (étape E2) permet de vérifier au cours de l'opération d'accrochage l'atteinte par le crochet de la zone d'arrêt permettant au bras d'accrocher la caisse au crochet 20.

La zone de ralentissement Zr et la zone d'arrêt Za peuvent consister en des zones sensiblement circulaires et concentriques. La zone d'arrêt Za peut présenter un rayon inférieur au rayon de la zone de ralentissement Zr, de sorte que la zone de ralentissement Zr s'étend tout autour de la zone d'arrêt Za. Ainsi, les zones de ralentissement Zr et d'arrêt Za sont adaptées pour que le crochet 20 pendant le chargement/déchargement pénètre en premier lieu dans la zone de ralentissement Zr, la vitesse du crochet 20 étant alors diminuée, puis en second lieu dans la zone d'arrêt Za, la vitesse du crochet 20 étant alors annulée.

Typiquement, la zone d'arrêt Za peut être une zone sensiblement circulaire de quelques centimètres de rayon. Il est important de parler de zone d'arrêt, et non de position d'arrêt, la chaine de commande du bras n'étant pas forcément capable d'atteindre de manière stable une position fixe. Cela en raison des effets d'inertie lors du mouvement des pièces en métal constituantes du bras, ainsi que de la latence créée par la lecture des postions mesurées par les capteurs, et par la chaine de commande électronique et/ou hydraulique.

Dans le cas de l'utilisation d'un système de régulation suffisamment précis, du type commande proportionnelle, avec asservissement et correcteur Proportionnel, Intégrateur, Dérivateur, il est possible de que la zone d'arrêt devienne une zone circulaire de quelque millimètre de rayon, voire un point. Dans le cas où la zone d'arrêt est un point, elle correspond à une position cible du crochet dans le repère XOY.

Lorsque la position mesurée se situe dans la zone d'arrêt, on peut prévoir qu'un signal à l'attention de l'opérateur soit généré (étape E3). Un tel signal peut être visuel ou sonore. La position du crochet est mesurée de plusieurs manières en fonction de la configuration du bras comme décrit précédemment. Dans le cas des configurations des figures 1 et 2, la position du crochet est donnée par la relation Pc ci-dessus, la détermination de la position du crochet comprenant la mesure E11 de l'angle a et éventuellement de l'angle dans le cas des configurations des figures 3 et 4, la position du crochet est donnée par la relation Pc' ci-dessus, la détermination de la position du crochet comprenant la mesure E12 de l'angle a, de l'angle c et éventuellement de l'angle b.

On peut également prévoir que le système bloque (étape E4) automatiquement le mouvement du crochet et donc du bras lorsque la position du crochet se situe dans la zone d'arrêt.

Cette indication signifie que le bras est dans une position permettant de saisir la caisse par le crochet.

En outre, la vitesse de manoeuvre peut-être automatiquement limitée (étape E5) à la fin du mouvement lorsque le crochet se situe dans la zone de ralentissement. Cela afin de pouvoir anticiper et atteindre sans la dépasser la zone d'arrêt. De manière avantageuse, la zone de ralentissement commence entre 50 cm et 150 cm de la zone d'arrêt Za, de préférence à environ un mètre de la zone d'arrêt Za. La zone de ralentissement Zr présente de préférence un rayon compris entre 50 cm et 1,5 m, de préférence d'environ 1m.

L'unité de traitement peut être configurée pour limiter la vitesse du bras lorsque la position mesurée se situe dans la zone de ralentissement Zr, et pour bloquer le bras lorsque la position mesurée se situe dans la zone d'arrêt Za, la zone d'accrochage du crochet 20 à l'organe de préhension de la caisse étant alors atteinte.

Le premier mode de réalisation peut également permettre un pilotage automatique de l'accrochage d'une caisse sur le véhicule.

Dans ce cas, le système contrôle les différents vérins du bras de manière simultanée ou bien de manière successive, dans le but d'amener le crochet 20 à l'intérieur de la zone d'arrêt Za. Le rôle de l'utilisateur se limite à démarrer ou bien stopper la manoeuvre automatique du bras.

On peut également prévoir une zone de ralentissement concentrique à la zone d'arrêt, le système étant configuré pour ralentir automatiquement lorsque le crochet se trouve dans cette zone.

Selon un deuxième mode de réalisation, complémentaire ou indépendant à un ou plusieurs mode(s) de réalisation ci-dessus décrit, le système de manoeuvre permet d'éviter que le crochet 20, au cours d'une opération de chargement et/ou de déchargement de la caisse, ne pénètre dans une zone à risque de collision Zrc, notamment lorsque cette opération de chargement est effectuée manuellement. En effet, au cours de cette manœuvre, l'utilisateur peut commander un mouvement qui mette l'anneau dans la zone à risque de collision ce qui peut provoquer une collision entre

- le crochet et l'arrière du véhicule ;
- le crochet et le faux châssis FCH ;
- la caisse et l'arrière du véhicule ;
- la caisse et le faux-châssis FCH.

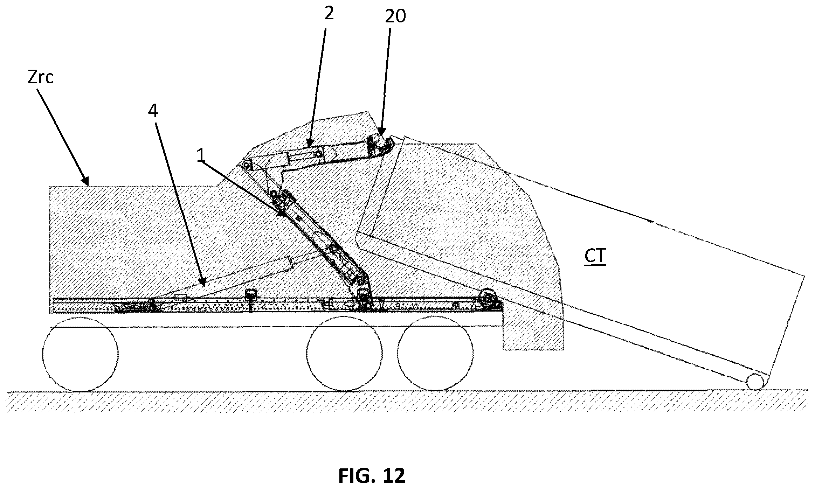

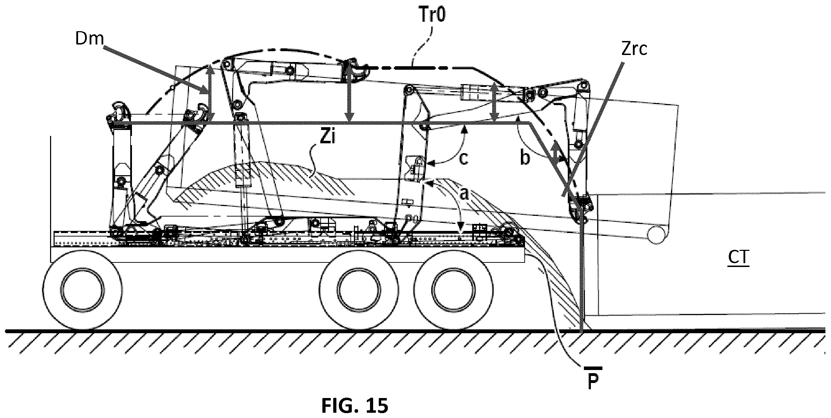

Dans une phase d'initialisation, une zone à risque de collision Zrc est déterminée (étape E03), la zone à risque de collision Zrc correspondant à une zone dans laquelle la caisse ou le crochet 20 a un risque de collision mécanique avec le camion ou le bras au cours de l'opération de chargement de la caisse. La zone à risque de collision Zrc peut être définie via des caractéristiques telles que des coordonnées ou des coins, et correspond à une zone dans laquelle le crochet 20 ne doit pas se trouver. Les caractéristiques de cette zone à risque de collision Zrc sont avantageusement stockées dans la mémoire non-volatile 52 du système de manoeuvre. Un exemple de zone à risque de collision Zrc est illustré en figures 12 et 15.

La zone à risque de collision Zrc est avantageusement fonction de plusieurs paramètres. Elle dépend notamment :

- de la hauteur de l'essieu du camion sur lequel le bras est agencé. La hauteur de l'essieu étant en général variable car régulée par l'électronique du camion, le système peut être capable de commander la désactivation de cette régulation afin d'obtenir une hauteur fixe et connue ;
- de la configuration du bras et de ses dimensions (L1, L1', L2, tailles des longerons...)
- de la hauteur de l'anneau de la caisse ;
- de la longueur de la caisse.
- la hauteur relative entre les roues du camion et le sol où est posée la caisse.

La mémoire non-volatile du système de manoeuvre peut contenir les caractéristiques de différentes zones à risque de collision dans le système, correspondant à diverses configurations de caisse. L'utilisateur doit pouvoir sélectionner les paramètres adaptés à la caisse qu'il veut charger.

Il est également possible de prévoir une sélection automatique de la zone à risque de collision, si le système est capable d'identifier la caisse en cours de chargement via par exemple un marquage spécifique (code-barres, QR code...) ou tout autre système d'identification (RFID...). Le système sélectionnera alors automatiquement la zone à risque de collision adaptée à la caisse qu'il a identifiée.

En outre, il peut arriver que la configuration de la caisse à charger ne corresponde à aucune des configurations mémorisées dans le système. Dans ce cas, il est possible de prévoir une configuration prévoyant les conditions les plus défavorables pour la manipulation de la caisse (exemple : caisse de longueur minimum, roues du camion situées en haut de la caisse).

A partir de la zone à risque de collision Zrc, l'unité de traitement détermine au cours d'une phase de chargement que le crochet 20 (et donc le bras) ne rentre pas dans la zone à risque de collision Zrc. L'unité de traitement est ainsi configurée pour vérifier au cours de l'opération de chargement si la position mesurée se situe à l'intérieur de la zone à risque de collision Zrc.

Dans le cas où les angles et positions linéaires mesurés correspondent à une position située à l'intérieur de la zone à risque de collision Zrc, on peut prévoir qu'un signal à l'attention de l'opérateur soit généré (étape E7). Un tel signal peut être visuel ou sonore. L'unité de traitement est ainsi configurée pour générer un signal indiquant que la position mesurée se situe à l'intérieur de la zone à risque de collision Zrc, le signal étant typiquement sonore ou visuel.

De manière complémentaire, on peut prévoir que l'opérateur ne puisse plus commander (étape E7') le bras. Dans ce cas, l'opérateur devra effectuer une manoeuvre inverse pour remettre le bras en dehors de la zone à risque de collision. L'unité de traitement peut être configurée pour autoriser uniquement les mouvements du bras permettant de sortir le crochet de la zone à risque de collision Zrc, et interdire tout autre mouvement du bras. En d'autres termes, l'unité de traitement est configurée pour n'autoriser que des mouvements du bras adaptés pour rapprocher le crochet 20 d'une limite extérieure de la zone à risque de collision Zrc.

Comme pour le premier mode de réalisation, la position du crochet à plusieurs instants est déterminée (étape E1) en mesurant différents angles et positions linéaires fonction de la configuration bras et en mettant en oeuvre les étapes E11, E12 ci-dessus décrite afin de déterminer la position du crochet 20.

En fonction de la configuration, il va être vérifié au cours de la phase de chargement de la caisse que la position du crochet déterminée via les angles et positions linéaires mesurés n'appartient pas à la zone à risque de collision Zrc. En particulier, l'unité de traitement vérifie (étape E2) que chaque position n'appartient pas à la zone à risque de collision.

Dans tous les cas il est possible de prévoir des avertissement lumineux et sonores sur l'interface utilisateur, afin que celui-ci maintienne son attention lors de la manœuvre de chargement, et ce malgré l'assistance et le confort fournis par le système.

Selon un troisième mode de réalisation, complémentaire ou indépendant à un ou plusieurs mode(s) de réalisation ci-dessus décrit, le système de manoeuvre permet de contrôler la pression dans l'un des vérins lorsque le crochet, au cours d'une opération de chargement de la caisse pénètre dans une zone à risque d'effort Zre, notamment lorsque cette opération de déchargement est effectuée manuellement. En effet, au cours de cette manoeuvre, la caisse est en contact avec le bras (faux châssis) et l'utilisateur peut commander un mouvement qui créé un effort trop important, c'est-à-dire susceptible de résulter en une casse matérielle, entre :

- le crochet et l'arrière du véhicule ;
- le crochet et le faux châssis FCH ;
- la caisse et l'arrière du véhicule ;
- la caisse et le faux-châssis FCH.

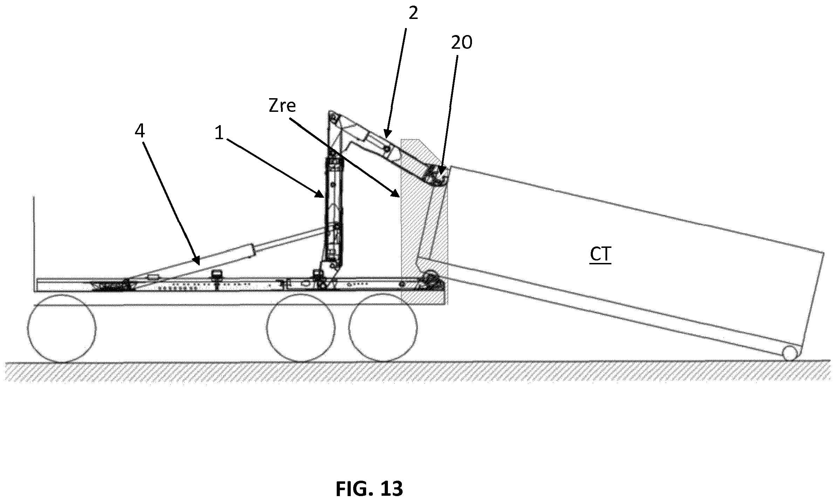

Dans une phase d'initialisation, une zone à risque d'effort Zre est déterminée (étape E03). La zone à risque d'effort Zre correspond à une zone dans laquelle il y a un risque d'effort trop important, c'est-à-dire susceptible de résulter en une casse matérielle, entre la caisse ou le crochet d'une part, et le camion ou le bras d'autre part au cours de l'opération de déchargement de la caisse. Cette zone à risque d'effort Zre est avantageusement stockée dans la mémoire non-volatile du système de manoeuvre. L'unité de traitement est configurée pour vérifier au cours de l'opération de déchargement si la position mesurée Pc du crochet 20 se situe à l'intérieur de la zone à risque d'effort Zre. Un exemple de zone à risque d'effort Zre est illustré en figure 13.

La zone à risque d'effort Zre est définie via des caractéristiques, telles que des coordonnées ou des coins, et est une zone dans laquelle il faut surveiller la pression dans le vérin lorsque le crochet 20 s'y trouve.

La zone à risque d'effort Zre est avantageusement fonction de plusieurs paramètres. Elle dépend notamment :

- de la hauteur de l'essieu du camion sur lequel le bras est agencé. La hauteur de l'essieu étant en général variable car régulée par l'électronique du camion, le système peut être capable de commander la désactivation de cette régulation afin d'obtenir une hauteur fixe et connue ;
- de la configuration du bras et de ses dimensions (L1, L1', L2, tailles des longerons...)
- de la hauteur de l'anneau de la caisse ;
- de la longueur de la caisse ;
- de la hauteur relative entre les roues du camion et le sol où est posée la caisse.

Le système doit pouvoir mémoriser différentes zones à risque d'effort dans le système, correspondantes à diverses configurations de caisse. L'utilisateur doit pouvoir sélectionner les paramètres adaptés à la caisse qu'il veut décharger.

Il est également possible de prévoir une sélection automatique de la zone à risque d'effort Zre, si le système est capable d'identifier la caisse en cours de chargement via par exemple un marquage spécifique (code-barres, QR code...) ou tout autre système d'identification (RFID...). Le système sélectionnera alors automatiquement la zone à risque d'effort Zre adaptée à la caisse qu'il a identifiée.

En outre, il peut arriver que la configuration de la caisse à décharger ne corresponde à aucune des configurations mémorisées dans le système. Dans ce cas il est possible de prévoir une configuration prévoyant les conditions les plus défavorables pour la manipulation de la caisse.

A partir de la zone à risque d'effort, l'unité de traitement détermine au cours d'une phase de déchargement que la pression dans le vérin ne doit pas dépasser une certaine limite si le crochet se trouve dans la zone à risque d'effort.

Le système peut donc comprendre une unité de mesure de la pression régnant dans au moins un vérin. Au cours de l'opération de déchargement de la caisse, l'unité 51 de traitement est configurée pour générer un signal indiquant une surpression dans le vérin lorsque que la position mesurée Pc du crochet 20 se situe à l'intérieur de la zone à risque d'effort Zre et que l'unité de mesure de la pression détecte une surpression dans le vérin. En d'autres termes, dans le cas où les angles et positions linéaires mesurés correspondent à une position située à l'intérieur de la zone à risque d'effort, et que la pression est supérieure à la limite, on peut prévoir qu'un signal à l'attention de l'opérateur soit généré (étape E8). Un tel signal peut être visuel ou sonore.

De manière complémentaire, on peut prévoir que l'opérateur ne puisse plus commander (étape E8') le bras. Dans ce cas, l'opérateur devra effectuer une manoeuvre n'augmentant pas la pression dans le vérin, afin de continuer le déchargement. En d'autres termes, l'unité de traitement peut être configurée pour interdire tout mouvement du bras en cas de surpression dans le vérin alors que la position mesurée se situe à l'intérieur de la zone à risque d'effort Zre.

Comme pour le premier mode de réalisation, la position du crochet à plusieurs instants est déterminée (étape E1) en mesurant différents angles et positions linéaires fonction de la configuration bras et en mettant en oeuvre les étapes E11, E12 ci-dessus décrites afin de déterminer la position du crochet.

En fonction de la configuration, il va être vérifié au cours de la phase de chargement de la caisse que la position du crochet déterminée via les angles et positions linéaires mesurés n'appartiennent pas à la zone à risque d'effort. En particulier, l'unité de traitement vérifie (étape E2) que chaque position n'appartient pas à la zone à risque d'effort.

Dans tous les cas il est possible de prévoir des avertissement lumineux et sonores sur l'interface utilisateur, afin que celui-ci maintienne son attention lors de la manoeuvre de déchargement, et ce malgré l'assistance et le confort fourni par le système.

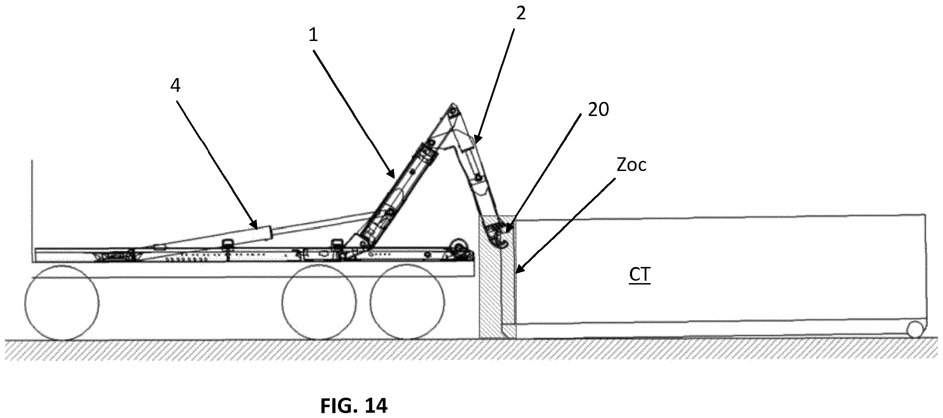

Selon un quatrième mode de réalisation, la mémoire contient des caractéristiques d'une zone d'ouverture du crochet Zoc, dans laquelle le crochet peut être ouvert sans risque de faire tomber la caisse. Un exemple de zone d'ouverture du crochet Zoc est illustré en figure 14.

L'unité de traitement est configurée pour vérifier au cours de l'opération de déchargement si la position mesurée se situe à l'intérieur de la zone d'ouverture du crochet Zoc.

Le bras est équipé d'un crochet dont l'ouverture peut être pilotée par l'unité de traitement, l'unité de traitement étant en outre configurée pour ouvrir automatiquement le crochet lorsque la position mesurée se situe à l'intérieur de la zone d'ouverture du crochet Zoc (étape E9).

Selon un cinquième mode de réalisation, le système de manoeuvre permet d'aider au chargement d'une caisse sur le véhicule. Cette phase de chargement est consécutive à l'opération d'accrochage. Ce cinquième mode de réalisation peut être implémenté seul ou en combinaison avec le premier mode de réalisation, c'est-à-dire que la phase d'accrochage peut être réalisée de n'importe quelle manière pourvu que la caisse soit accrochée au bras par l'intermédiaire du crochet. Le cinquième mode de réalisation permet en particulier un pilotage automatique du chargement d'une caisse sur le véhicule, sans nécessiter d'intervention manuelle d'un utilisateur. Le rôle de l'utilisateur se limite alors à démarrer ou bien stopper la manoeuvre automatique du bras.

Dans une phase d'initialisation une trajectoire optimale Tro est déterminée (étape E02). Cette trajectoire optimale Tro est avantageusement stockée dans la mémoire non-volatile du système d'aide à l'accrochage.

La trajectoire optimale est en fait une succession de positions cibles $P_1$, $P_2$, $P_N$ (avec N le nombre de points permettant de décrire toute la trajectoire) du crochet que le crochet du bras doit suivre.

Cette trajectoire optimale Tro permet :

- d'éviter que la caisse ne heurte le camion pendant la manœuvre ;
- de plier l'angle b (cas des figures 2 et 4) afin de diminuer l'angle de la caisse par rapport au sol pour ne pas laisser tomber de la marchandise pendant la manoeuvre ;
- de plier l'angle b (cas des figures 2 et 4) afin d'augmenter la capacité de chargement du bras en diminuant du bras de levier entre la charge et l'axe de rotation 10 ;
- de modifier la course de la glissière pour pouvoir effectuer du chargement ou déchargement de caisse sur remorque d'attelage (figures 1 et 2, dans le cas où M4 est installé).

La trajectoire optimale Tro est avantageusement fonction de plusieurs paramètres. Elle dépend notamment :

- De la hauteur du châssis du camion sur lequel le bras est monté ; La hauteur de l'essieu étant en général variable car régulée par l'électronique du camion, le système peut être capable de commander la désactivation de cette régulation afin d'obtenir une hauteur fixe et connue ;
- De la configuration du bras et de ses dimensions (L1, L1', L2, tailles des longerons...)
- De la hauteur de l'anneau de la caisse ;
- De la longueur de la caisse.
- La hauteur relative entre les roues du camion et le sol où est posée la caisse.
- La technologie de commande hydraulique

Cette trajectoire optimale Tro obtenue, un calcul des différents angles a, b, c et positions linéaires mesurées selon la configuration du bras du dispositif de manutention est effectué. Ainsi, pour chaque point de la trajectoire optimale une combinaison d'angles et de positions linéaires est calculé. Chaque combinaison correspond en fait à une position cible du crochet.

A partir de la trajectoire optimale Tro, l'unité de traitement contrôle (étape E6) automatiquement les différents vérins du bras au cours d'une phase de chargement afin que le crochet (et donc le bras) suive la trajectoire optimale. L'utilisateur peut à tout moment interrompre le mouvement en relâchant la commande de son bras.

Comme pour le premier mode de réalisation, la position du crochet à plusieurs instants est déterminée (étape E1) en mesurant différents angles fonction de la configuration bras et en mettant en œuvre les étapes E11, E12 ci-dessus décrites afin de déterminer la position du crochet.

En fonction de la configuration, il va être vérifié au cours de la phase de chargement de la caisse que les angles et positions linéaires mesurés appartiennent bien à la trajectoire optimale. En particulier, l'unité de traitement compare (étape E2) chaque position mesurée à l'ensemble des positions cibles qui correspondent à la trajectoire optimale Tro que le crochet doit suivre. Elle commande (étape E6) alors les mouvements du bras afin que la position du crochet passe successivement par chaque position cible de sorte que la position du crochet qui est mesurée soit asservie successivement sur les positions cibles décrivant la trajectoire optimale Tro.

La trajectoire optimale Tro peut correspondre à une trajectoire située à la limite de la zone à risque de collision Zrc. La position du crochet est déterminée en continu au cours d'une opération de chargement de la caisse. Le système est adapté pour piloter le bras au cours d'une opération de chargement de la caisse de manière à ce que le crochet 20 suive la trajectoire optimale Tro dépendant de la géométrie du bras et minimisant une distance Dm avec la zone à risque de collision Zrc, c'est-à-dire suive la trajectoire située à la limite de la zone à risque de collision Zrc. Dans ce cas, la trajectoire peut donc être déterminée par le système exclusivement d'après les caractéristiques de la zone de collision Zrc, et les positions cibles de la trajectoire ne nécessitent pas obligatoirement d'être stockées dans la mémoire non volatile. Seules les caractéristiques de la zone de collision Zrc doivent alors être stockées dans la mémoire non volatile.

L'unité de traitement est en outre configurée pour commander le bras afin que le crochet 20 suive ladite trajectoire optimale Tro et pour vérifier que la position mesurée se situe en dehors et à distance minimale Dm de la zone à risque de collision Zrc, c'est-à-dire toujours à la limite de la zone à risque de collision Zrc.

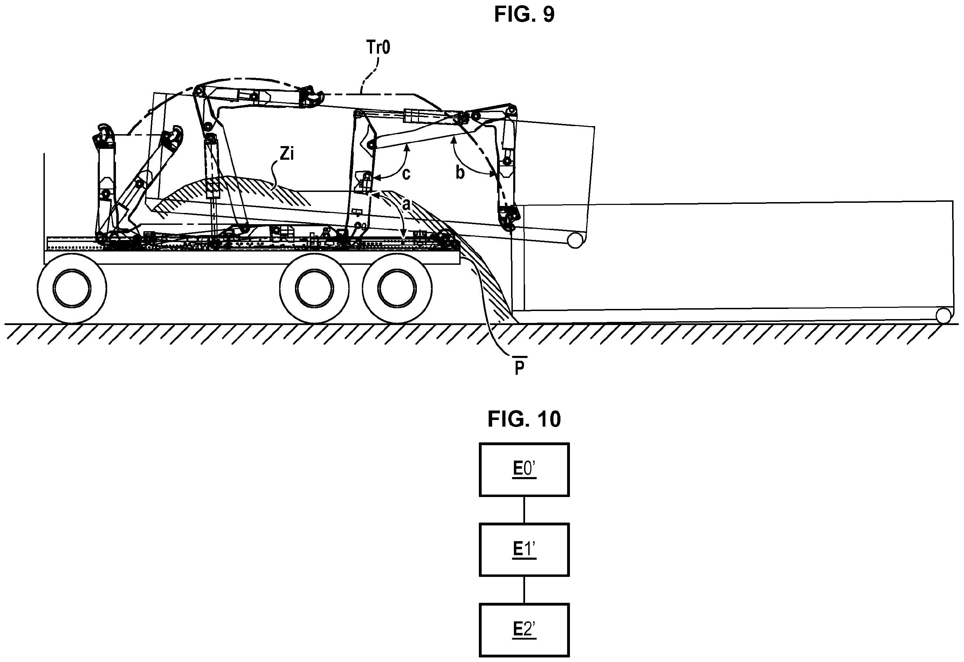

On a illustré sur la **figure 9**, une trajectoire optimale Tro dans le cas d'une configuration de bras conforme à la figure 4. Une distance minimale Dm et une trajectoire optimale Tro sont illustrées à titre d'exemple en figure 15.

Selon un sixième mode de réalisation complémentaire ou indépendant à un ou plusieurs mode(s) de réalisation ci-dessus décrit, le système de manœuvre permet d'éviter le flambage du vérin 4 reliant le faux-châssis au châssis central 1 (figures 1 et 2) ou le bras de levage 1' (figures 3 et 4).

Selon ce mode de réalisation, dans une étape d'initialisation (étape E0') une configuration selon laquelle un risque de flambage de la première paire de vérins 4 est déterminée. Une telle configuration fixe une valeur limite de l'angle a (entre le châssis central 1 et le faux-châssis) ainsi qu'une valeur limite de pression à partir desquelles le risque de flambage est présent.

Afin d'éviter le flambage de la première paire de vérins, l'unité de traitement commande la mesure de l'angle a (étape E1') et la mesure (étape E2') de la pression régnant dans les corps de la première paire de vérins.

Si l'angle est supérieur à la valeur limite configurée et que la pression est supérieure à la valeur limite configurée, on peut prévoir qu'un signal à l'attention de l'opérateur est généré. Un tel signal peut être visuel ou sonore.

De manière complémentaire, on peut prévoir que l'opérateur ne puisse plus commander le bras. Dans cas, l'opérateur devra effectuer une manœuvre inverse (diminution de l'angle a) pour remettre le bras en dehors de la zone interdite.

Une variante de ce mode de réalisation consiste à contrôler uniquement l'angle a à partir de laquelle un risque de flambage de la première paire de vérins 4 est déterminée. Si l'angle est supérieur à la valeur limite configurée, le vérin équipoe est alors alimentée via une ligne hydraulique spécifique contenant un limiteur de pression. Dans cette configuration, il peut être possible de prévoir un signal à l'attention de l'opérateur, si l'angle est supérieur à la valeur limite configurée et si la pression mesurée est égale à la pression maximum admise par le limiteur de pression. Un tel signal peut être visuel ou sonore.

**Revendications**

1. Système de manœuvre d'un dispositif de manutention destiné à équiper le châssis (CH) d'un véhicule pour le chargement et le déchargement d'une caisse (CT) ; ledit dispositif de manutention comprenant un bras constitué d'un faux-châssis (FCH), d'un châssis central (1) articulé sur le faux-châssis (FCH) et d'au moins un élément mobile (2) lié directement ou indirectement au châssis central (1), un élément mobile étant pourvu à son extrémité libre d'un crochet (20) adapté pour venir en prise avec un organe de préhension tel qu'un anneau (AN) solidaire de l'avant de la caisse, ledit système comprenant :

   - un ensemble d'un ou plusieurs capteurs parmi un capteur angulaire et/ou un inclinomètre et/ou un capteur linéaire et/ou un capteur de position, le(s) capteur(s) étant configuré(s) pour effectuer respectivement une mesure d'angle et/ou d'inclinaison et/ou de course et/ou de position en continu au cours d'une manipulation du bras ;
   - une unité (51) de traitement configurée pour déterminer (E1) la position (Pc) du crochet (20) en continu au cours de la manipulation du bras, à partir d'une ou plusieurs mesure(s) effectuée(s) par l'ensemble d'un ou plusieurs capteurs, la position (Pc) du crochet (20) correspondant à une position cartésienne du crochet (20) dans un repère XOY, le repère XOY ayant comme axe (X) des abscisses un axe horizontal orienté vers l'arrière du véhicule et comme axe (Y) des ordonnées un axe orienté vers le haut ;
   - une mémoire non volatile (52) adaptée pour stocker des caractéristiques d'au moins une zone d'intérêt (Za, Zr, Zrc, Zre, Zoc) définie dans le repère XOY ;

   l'unité de traitement étant en outre configurée pour vérifier (E2) en continu au cours de la manipulation du bras si la position (Pc) du crochet (20) déterminée se trouve à l'intérieur de l'au moins une zone d'intérêt (Za, Zr, Zrc, Zre, Zoc), **caractérisé en ce que** la mémoire non volatile (52) comprend les caractéristiques de deux zones (Za, Zr) correspondant à :

   - une zone de ralentissement (Zr), dans laquelle la vitesse du crochet (20) est destinée à être ralentie par rapport à une vitesse du crochet (20) en dehors de ladite zone de ralentissement (Zr) au cours d'une opération d'accrochage de la caisse par l'intermédiaire du crochet (20), l'unité de traitement étant configurée pour limiter la vitesse du crochet (20) lorsque la position (Pc) du crochet (20) se situe dans la zone de ralentissement (Zr), et
   - une zone d'arrêt (Za), dans laquelle la vitesse du crochet (20) est destinée à être nulle au cours d'une opération d'accrochage de la caisse par l'intermédiaire du crochet (20), l'unité de traitement étant configurée pour bloquer le bras lorsque la position (Pc) du crochet (20) se situe dans la zone d'arrêt (Za).

2. Système selon la revendication 1, dans lequel la mémoire non volatile (52) contient des caractéristiques d'une zone à risque de collision (Zrc), dans laquelle la caisse ou le crochet (20) a un risque de collision mécanique avec le camion ou le bras au cours de l'opération de chargement de la caisse.

3. Système selon la revendication 2, dans lequel au cours d'une opération chargement de la caisse, l'unité (51) de traitement est configurée pour générer un signal indiquant que la position mesurée (Pc) du crochet (20) se situe à l'intérieur de la zone à risque de collision (Zrc), le signal étant typiquement sonore ou visuel.

4. Système selon l'une des revendications 2 ou 3, dans lequel l'unité de traitement est configurée pour, lorsque la position (Pc) du crochet (20) se situe dans la zone à risque de collision (Zrc) au cours d'une opération chargement de la caisse :

• autoriser uniquement les mouvements du bras adaptés pour rapprocher le crochet (20) d'une limite de la zone à risque de collision (Zrc),
• interdire tout autre mouvement du bras.

5. Système selon la revendication 1, dans lequel la mémoire non volatile (52) contient les caractéristiques d'une zone à risque d'effort (Zre), dans laquelle il y a un risque d'effort trop important, c'est-à-dire susceptible de résulter en une casse matérielle, entre la caisse ou le crochet (20) d'une part, et le camion ou le bras d'autre part, au cours d'une opération de déchargement de la caisse.

6. Système selon la revendication 5, comprenant une unité de mesure de la pression régnant dans au moins un vérin, dans lequel au cours d'une opération de déchargement de la caisse, l'unité (51) de traitement est configurée pour générer un signal indiquant une surpression dans le vérin lorsque que la position mesurée (Pc) du crochet (20) se situe à l'intérieur de la zone à risque d'effort (Zre) et que l'unité de mesure de la pression détecte une surpression dans le vérin, le signal étant typiquement sonore ou visuel.

7. Système selon l'une des revendications 5 ou 6, dans lequel l'unité de traitement est configurée pour interdire tout mouvement du bras en cas de surpression dans le vérin alors que la position mesurée (Pc) du crochet (20) se situe à l'intérieur de la zone à risque d'effort (Zre).

8. Système selon la revendication 1, dans lequel la mémoire non volatile (52) contient les caractéristiques d'une zone d'ouverture de crochet (Zoc), dans laquelle le crochet (20) peut être ouvert sans risque de faire tomber la caisse au cours d'une opération de déchargement de la caisse.

9. Système selon la revendication 8, dans lequel l'unité de traitement est configurée pour piloter automatiquement l'ouverture du crochet (20) lorsque la position mesurée (Pc) du crochet (20) au cours d'une opération de déchargement de la caisse se situe à l'intérieur de la zone d'ouverture de crochet (Zoc).

10. Système selon la revendication 2, dans lequel le système est adapté pour piloter le bras au cours d'une opération de chargement de la caisse de manière à ce que le crochet (20) suive une trajectoire optimale (Tro) dépendant de la géométrie du bras et minimisant la distance (Dm) avec la zone à risque de collision (Zrc), l'unité de traitement étant en outre configurée pour commander le bras afin que le crochet (20) suive ladite trajectoire optimale (Tro) et pour vérifier que la position mesurée se situe en dehors et à distance minimale (Dm) de la zone à risque de collision (Zrc).

11. Système selon la revendication 1, dans lequel au cours d'une opération d'accrochage de la caisse, l'unité (51) de traitement est configurée pour générer un signal indiquant que la position mesurée (Pc) du crochet (20) se situe à l'intérieur de la zone d'arrêt (Za), le signal étant typiquement sonore ou visuel.

12. Système selon l'une des revendications 1 ou 11, dans lequel la zone de ralentissement (Zr) s'étend tout autour de la zone d'arrêt (Za), et dans lequel l'unité de traitement est configurée pour piloter automatiquement le bras afin que le crochet (20) atteigne la zone d'arrêt (Za) en passant par la zone de ralentissement (Zr).

13. Système selon l'une des revendications précédentes, dans lequel le châssis central fait un angle a avec le faux-châssis, la potence faisant un angle b avec le châssis central, l'unité (51) de traitement étant configurée pour déterminer la position Pc du crochet en fonction de l'angle a et de l'angle b, dans un repère XOY ayant comme axe X des abscisse un axe horizontal orienté vers l'arrière du véhicule et un axe Y des ordonnées orienté vers le haut, ladite position du crochet Pc=(Xc, Yc) étant dans ce repère :

$$Xc = L1 * cos(a) + L2 * cos(a + b) + X10$$

$$Yc = L1 * sin(a) - L2 * sin(a + b) + Y10$$

avec

- (X10, Y10) = Coordonnées de l'axe de rotation entre le châssis et le faux-châssis dans le repère ;
- (Xc,Yc) = Coordonnées du centre du crochet dans le repère ;

- L1 = longueur entre l'axe de rotation entre le châssis central et le faux-châssis et l'origine de l'angle b ;
- L2 = longueur entre l'origine de l'angle b et le centre du crochet.

14. Système selon l'une des revendications précédentes, comprenant en outre une potence en deux parties, une première partie formant un ange c avec le châssis central et une deuxième partie formant un angle b avec la deuxième partie, la position du crochet Pc' étant fonction de l'angle a, l'angle b et l'angle c dans un repère XOY ayant comme axe X des abscisse un axe horizontal orienté vers l'arrière du véhicule et un axe Y des ordonnées orienté vers le haut, ladite position du crochet PC'=(Xc', Yc') étant dans ce repère

$$X_{C'} = L1' * \cos(a) - L1 * \cos(a + c) + L2 * \cos(a + b + c) + X10$$

$$Y_{C'} = L1' * \sin(a) - L1 * \sin(a + c) + L2 * \sin(a + b + c) + Y10$$

avec

- (X10, Y10) = Coordonnées de l'axe de rotation entre le châssis et le faux-châssis dans le repère ;
- (Xc',Yc') = Coordonnées du centre du crochet dans le repère
- L1' = longueur entre l'axe de rotation entre le châssis central et le faux-châssis dans le repère et l'origine de l'angle c ;
- L1 = longueur entre les origines des angles c et b ;
- L2 = longueur entre l'origine de l'angle b et le centre du crochet.

**Patentansprüche**

1. System zum Manövrieren einer Verladevorrichtung, die dazu bestimmt ist, den Rahmen (CH) eines Fahrzeugs für das Aufladen und Abladen einer Kiste (CT) auszustatten; wobei die Verladevorrichtung einen Arm umfasst, der aus einem Hilfsrahmen (FCH), aus einem mittlerem Rahmen (1), der gelenkig an dem Hilfsrahmen (FCH) gelagert ist, und aus mindestens einem beweglichen Element (2) besteht, das direkt oder indirekt mit dem mittleren Rahmen (1) verbunden ist, wobei ein bewegliches Element an seinem freien Ende mit einem Haken (20) versehen ist, der dazu geeignet ist, mit einem Greiforgan, wie beispielsweise einem Ring (AN), der fest mit dem Vorderteil der Kiste verbunden ist, in Eingriff zu gelangen, wobei das System umfasst:

- eine Gruppe aus einem oder mehreren Sensoren, darunter ein Winkelsensor und/oder ein Neigungsmesser und/oder ein Zeilensensor und/oder ein Positionssensor, wobei der/die Sensor/en dazu ausgestaltet ist/sind, im Laufe einer Betätigung des Armes kontinuierlich eine Winkel- und/oder Neigungs- und/oder Weg- und/oder Positionsmessung durchzuführen;
- eine Verarbeitungseinheit (51), die dazu ausgestaltet ist, im Laufe der Betätigung des Armes kontinuierlich die Position (Pc) des Hakens (20) ausgehend von einer oder mehreren Messungen zu bestimmen (E1), die von der Gruppe aus einem oder mehreren Sensoren durchgeführt wird/werden, wobei die Position (Pc) des Hakens (20) einer kartesischen Position des Hakens (20) in einem XOY-Koordinatensystem entspricht, wobei das XOY-Koordinatensystem als Abszissenachse (X) eine horizontale Achse aufweist, die hin zum Heck des Fahrzeugs ausgerichtet ist, und als Ordinatenachse (Y) eine Achse aufweist, die nach oben ausgerichtet ist;
- einen nichtflüchtigen Speicher (52), der dazu geeignet ist, Eigenschaften mindestens einer Zone von Interesse (Za, Zr, Zrc, Zre, Zoc) zu speichern, die in dem XOY-Koordinatensystem definiert ist;

wobei die Verarbeitungseinheit ferner dazu ausgestaltet ist, kontinuierlich im Laufe der Betätigung des Armes zu prüfen (E2), ob die bestimmte Position (Pc) des Hakens (20) sich innerhalb von der mindestens einen Zone von Interesse (Za, Zr, Zrc, Zre, Zoc) befindet, **dadurch gekennzeichnet, dass** der nichtflüchtige Speicher (52) die Eigenschaften von zwei Zonen (Za, Zr) umfasst, die entsprechen:

- einer Verlangsamungszone (Zr), in der die Geschwindigkeit des Hakens (20) dazu bestimmt ist, in Bezug auf eine Geschwindigkeit des Hakens (20) außerhalb der Verlangsamungszone (Zr) im Laufe eines Vorgangs des Einhakens der Kiste mittels des Hakens (20) verlangsamt zu werden, wobei die Verarbeitungseinheit dazu ausgestaltet ist, die Geschwindigkeit des Hakens (20) zu begrenzen, wenn die Position (Pc) des Hakens (20) sich in der Verlangsamungszone (Zr) befindet, und
- eine Anhaltezone (Za), in der die Geschwindigkeit des Hakens (20) dazu bestimmt ist, im Laufe eines Vorgangs des Einhakens der Kiste mittels des Hakens (20) null zu sein, wobei die Verarbeitungseinheit dazu ausgestaltet ist, den Arm zu blockieren, wenn die Position (Pc) des Hakens (20) sich in der Anhaltezone (Za) befindet.

2. System nach Anspruch 1, wobei der nichtflüchtige Speicher (52) Eigenschaften einer Kollisionsgefahrenzone (Zrc) enthält, in der im Laufe des Vorgangs des Aufladens der Kiste bei der Kiste oder dem Haken (20) eine Gefahr einer mechanischen Kollision mit dem Lastwagen oder dem Arm besteht.

3. System nach Anspruch 2, wobei die Verarbeitungseinheit (51) im Laufe eines Vorgangs des Aufladens der Kiste dazu ausgestaltet ist, ein Signal zu erzeugen, das angibt, dass die gemessene Position (Pc) des Hakens (20) sich im Inneren der Kollisionsgefahrenzone (Zrc) befindet, wobei das Signal typischerweise ein akustisches oder visuelles Signal ist.

4. System nach einem der Ansprüche 2 oder 3, wobei die Verarbeitungseinheit, wenn die Position (Pc) des Hakens (20) sich im Laufe eines Vorgangs des Aufladens der Kiste in der Kollisionsgefahrenzone (Zrc) befindet, ausgestaltet ist zum:

   • Zulassen einzig der Bewegungen des Armes, die dazu geeignet sind, den Haken (20) an eine Grenze der Kollisionsgefahrenzone (Zrc) anzunähern,
   • Sperren jeder weiteren Bewegung des Armes.

5. System nach Anspruch 1, wobei der nichtflüchtige Speicher (52) die Eigenschaften einer Beanspruchungsgefahrenzone (Zre) enthält, in der eine Gefahr einer zu hohen Beanspruchung besteht, das heißt, in der ein materieller Schaden zwischen der Kiste oder dem Haken (20) einerseits und dem Lastwagen oder dem Arm andererseits im Laufe eines Vorgangs des Abladens der Kiste entstehen kann.

6. System nach Anspruch 5, das eine Einheit zum Messen des in mindestens einem Zylinder herrschenden Drucks umfasst, wobei die Verarbeitungseinheit (51) dazu ausgestaltet ist, im Laufe eines Vorgangs des Abladens der Kiste ein Signal zu erzeugen, das einen Überdruck in dem Zylinder angibt, wenn die gemessene Position (Pc) des Hakens (20) sich innerhalb der Beanspruchungsgefahrenzone (Zre) befindet und die Druckmesseinheit einen Überdruck in dem Zylinder misst, wobei das Signal typischerweise akustisch oder visuell ist.

7. System nach einem der Ansprüche 5 oder 6, wobei die Verarbeitungseinheit dazu ausgestaltet ist, jede Bewegung des Armes im Fall von Überdruck in dem Zylinder zu sperren, während die gemessene Position (Pc) des Hakens (20) sich im Inneren der Beanspruchungsgefahrenzone (Zre) befindet.

8. System nach Anspruch 1, wobei der nichtflüchtige Speicher (52) die Eigenschaften einer Hakenöffnungszone (Zoc) enthält, in der der Haken (20) geöffnet werden kann, ohne dass die Gefahr besteht, dass die Kiste im Laufe eines Vorgangs des Abladens der Kiste herunterfällt.

9. System nach Anspruch 8, wobei die Verarbeitungseinheit dazu ausgestaltet ist, die Öffnung des Hakens (20) automatisch zu steuern, wenn die gemessene Position (Pc) des Hakens (20) im Laufe eines Vorgangs des Abladens der Kiste sich innerhalb der Hakenöffnungszone (Zoc) befindet.

10. System nach Anspruch 2, wobei das System dazu geeignet ist, den Arm im Laufe eines Vorgangs des Aufladens der Kiste derart zu steuern, dass der Haken (20) einem optimalen Weg (Tro) folgt, der von der Geometrie des Armes abhängt und den Abstand (Dm) zur Kollisionsgefahrenzone (Zrc) minimiert, wobei die Verarbeitungseinheit ferner dazu ausgestaltet ist, den Arm zu steuern, damit der Haken (20) dem optimalen Weg (Tro) folgt, und um zu prüfen, dass die gemessene Position sich außerhalb des Mindestabstands (Dm) von der Kollisionsgefahrenzone (Zrc) befindet.

11. System nach Anspruch 1, wobei die Verarbeitungseinheit (51) dazu ausgestaltet ist, im Laufe eines Vorgangs des Einhakens der Kiste ein Signal zu erzeugen, das angibt, dass die gemessene Position (Pc) des Hakens (20) sich innerhalb der Anhaltezone (Za) befindet, wobei das Signal typischerweise akustisch oder visuell ist.

12. System nach einem der Ansprüche 1 bis 11, wobei die Verlangsamungszone (Zr) sich um die gesamte Anhaltezone (Za) herum erstreckt und wobei die Verarbeitungseinheit dazu ausgestaltet ist, den Arm automatisch zu steuern, damit der Haken (20) die Anhaltezone (Za) über die Verlangsamungszone (Zr) erreicht.

**13.** System nach einem der vorhergehenden Ansprüche, wobei der mittlere Rahmen einen Winkel a mit dem Hilfsrahmen bildet, wobei der Ausleger einen Winkel b mit dem mittleren Rahmen bildet, wobei die Verarbeitungseinheit (51) dazu ausgestaltet ist, die Position Pc des Hakens in Abhängigkeit vom Winkel a und vom Winkel b in einem XOY-Koordinatensystem zu bestimmen, das als X-Abszissenachse eine horizontale Achse, die hin zum Heck des Fahrzeugs ausgerichtet ist, und eine Y-Ordinatenachse aufweist, die nach oben ausgerichtet ist, wobei die Position des Hakens Pc = (Xc, Yc) in diesem Koordinatensystem ist:

$$Xc = L1*cos(a)+L2*cos(a+b)+X10$$

$$Yc = L1*sin(a)-L2*sin(a+b)+Y10$$

mit

- (X10, Y10) = Koordinaten der Drehachse zwischen dem Rahmen und dem Hilfsrahmen in dem Koordinatensystem;
- (Xc, Yc) = Koordinaten der Mitte des Hakens in dem Koordinatensystem;
- L1 = Länge zwischen der Drehachse zwischen dem mittleren Rahmen und dem Hilfsrahmen und dem Ursprung des Winkels b;
- L2 = Länge zwischen dem Ursprung des Winkels b und der Mitte des Hakens.

**14.** System nach einem der vorhergehenden Ansprüche, das ferner einen zweiteiligen Ausleger umfasst, wobei ein erster Teil einen Winkel c mit dem mittleren Rahmen bildet und ein zweiter Teil einen Winkel b mit dem zweiten Teil bildet, wobei die Position des Hakens Pc' eine Funktion des Winkels a ist, wobei der Winkel b und der Winkel c in einem XOY-Koordinatensystem als X-Abszissenachse eine horizontale Achse, die hin zum Heck des Fahrzeugs ausgerichtet ist, und eine Y-Ordinatenachse aufweisen, die nach oben ausgerichtet ist, wobei die Position des Hakens PC' = (Xc', Yc') in diesem Koordinatensystem ist:

$$Xc` = L1`*cos(a)-L1*cos(a+c)+L2*cos(a+b+c)+X10$$

$$Yc` = L1`*sin(a)-L1*sin(a+c)+L2*sin(a+b+c)+Y10$$

mit

- (X10, Y10) = Koordinaten der Drehachse zwischen dem Rahmen und dem Hilfsrahmen in dem Koordinatensystem;
- (Xc', Yc') = Koordinaten der Mitte des Hakens in dem Koordinatensystem;
- L1' = Länge zwischen der Drehachse zwischen dem mittleren Rahmen und dem Hilfsrahmen und dem Ursprung des Winkels c;
- L1 = Länge zwischen den Ursprüngen der Winkel c und b;
- L2 = Länge zwischen dem Ursprung des Winkels b und der Mitte des Hakens.

**Claims**

**1.** A system for maneuvering a handling device intended to equip the frame (CH) of a vehicle for loading and unloading a crate (CT); said handling device comprising an arm consisting of a subframe (FCH), a central frame (1) articulated on the subframe (FCH) and at least one movable element (2) linked directly or indirectly to the central frame (1), a movable element being provided at its free end with a hook (20) adapted to come into engagement with a gripping member such as a ring (AN) secured to the front of the crate, said system comprising:

- a set of one or several sensors among an angular sensor and/or an inclinometer and/or a linear sensor and/or a position sensor, the sensor(s) being configured to perform respectively a measurement of angle and/or inclination and/or stroke and/or position continuously during a manipulation of the arm;
- a processing unit (51) configured to determine (E1) the position (Pc) of the hook (20) continuously during the manipulation of the arm, from one or several measurement(s) performed by the set of one or several sensors, the position (Pc) of the hook (20) corresponding to a Cartesian position of the hook (20) in a reference frame XOY, the reference frame XOY having as abscissa axis (X) a horizontal axis oriented rearwardly of the vehicle and as ordinate axis (Y) an axis oriented upwards;
- a non-volatile memory (52) adapted to store characteristics of at least one area of interest (Za, Zr, Zrc, Zre, Zoc) defined in the reference frame XOY;

the processing unit being further configured to check (E2), continuously during the manipulation of the arm, whether the determined position (Pc) of the hook (20) is inside the at least one area of interest (Za, Zr, Zrc, Zre, Zoc), **characterized in that** the non-volatile memory (52) comprises the characteristics of two areas (Za, Zr) corresponding to:

- a slow-down area (Zr), in which the speed of the hook (20) is intended to be slowed down relative to a speed of the hook (20) outside said slow-down area (Zr) during an operation of hooking the crate via the hook (20), the processing unit being configured to limit the speed of the hook (20) when the position (Pc) of the hook (20) is in the slow-down area (Zr), and
- a stopping area (Za), in which the speed of the hook (20) is intended to be zero during an operation of hooking the crate via the hook (20), the processing unit being configured to block the arm when the position (Pc) of the hook (20) is in the stopping area (Za).

2. The system according to claim 1, wherein the non-volatile memory (52) contains characteristics of a collision risk area (Zrc), in which the crate or the hook (20) has a risk of mechanical collision with the truck or the arm during the crate loading operation.

3. The system according to claim 2, wherein during a crate loading operation, the processing unit (51) is configured to generate a signal indicating that the measured position (Pc) of the hook (20) is inside the collision risk area (Zrc), the signal being typically audible or visual.

4. The system according to any of claims 2 or 3, wherein the processing unit is configured, when the position (Pc) of the hook (20) is in the collision risk area (Zrc) during a crate loading operation, to:

   • only authorize the movements of the arm adapted to bring the hook (20) closer to a limit of the collision risk area (Zrc),
   • prohibit any other movement of the arm.

5. The system according to claim 1, wherein the non-volatile memory (52) contains the characteristics of an effort risk area (Zre) in which there is a risk of excessive effort, that is to say capable of resulting in material breakage between the crate or the hook (20) on the one hand, and the truck or the arm on the other hand, during a crate unloading operation.

6. The system according to claim 5, comprising a unit for measuring the pressure prevailing in at least one cylinder, wherein during an operation of unloading the crate, the processing unit (51) is configured to generate a signal indicating an overpressure in the cylinder when the measured position (Pc) of the hook (20) is inside the effort risk area (Zre) and when the pressure measurement unit detects an overpressure in the cylinder, the signal being typically audible or visual.

7. The system according to any of claims 5 or 6, wherein the processing unit is configured to prohibit any movement of the arm in case of overpressure in the cylinder while the measured position (Pc) of the hook (20) is inside the effort risk area (Zre).

8. The system according to claim 1, wherein the non-volatile memory (52) contains the characteristics of a hook opening area (Zoc), wherein the hook (20) can be opened without risk of dropping the crate during a crate unloading operation.

9. The system according to claim 8, wherein the processing unit is configured to automatically control the opening of the hook (20) when the measured position (Pc) of the hook (20) during a crate unloading operation is inside the hook opening area (Zoc).

10. The system according to claim 2, wherein the system is adapted to control the arm during a crate loading operation such that the hook (20) follows an optimal trajectory (Tro) depending on the geometry of the arm and minimizing the distance (Dm) with the collision risk area (Zrc), the processing unit being further configured to control the arm so that the hook (20) follows said optimal trajectory (Tro) and to check that the measured position is outside and at a minimum distance (Dm) from the collision risk area (Zrc).

11. The system according to claim 1, wherein during a crate hooking operation, the processing unit (51) is configured to generate a signal indicating that the measured position (Pc) of the hook (20) is inside the stopping area (Za), the signal being typically audible or visual.

12. The system according to any of claims 1 or 11, wherein the slow-down area (Zr) extends all around the stopping area (Za), and wherein the processing unit is configured to automatically control the arm so that the hook (20) reaches the stopping area (Za) passing through the slow-down area (Zr).

13. The system according to any of the preceding claims, wherein the central frame makes an angle a with the subframe, the jib crane making an angle b with the central frame, the processing unit (51) being configured to determine the position Pc of the hook as a function of the angle a and of the angle b, in a reference frame XOY having as abscissa axis X a horizontal axis oriented rearwardly of the vehicle and an ordinate axis Y oriented upwards, said position of the hook Pc = (Xc, Yc) being in this reference frame:

$$Xc = L1*cos(a)+L2*cos(a+b)+X10$$

$$Yc = L1*sin(a)-L2*sin(a+b)+Y10$$

with

- (X10, Y10) = Coordinates of the axis of rotation between the frame and the subframe in the reference frame;
- (Xc, Yc) = Coordinates of the center of the hook in the reference frame;
- L1 = length between the axis of rotation between the central frame and the subframe and the origin of the angle b;
- L2 = length between the origin of the angle b and the center of the hook.

14. The system according to any of the preceding claims, further comprising a jib crane in two parts, a first part forming an angle c with the central frame and a second part forming an angle b with the second part, the position of the hook Pc' being a function of the angle a, the angle b and the angle c in a reference frame XOY having as abscissa axis X a horizontal axis oriented rearwardly of the vehicle and an ordinate axis Y oriented upwards, said position of the hook PC'=(Xc', Yc') being in this reference frame:

$$Xc' = L1'*cos(a)-L1*cos(a+c)+L2*cos(a+b+c)+X10$$

$$Yc' = L1'*sin(a)-L1*sin(a+c)+L2*sin(a+b+c)+Y10$$

with

- (X10, Y10) = Coordinates of the axis of rotation between the frame and the subframe in the reference frame;
- (Xc', Yc') = Coordinates of the center of the hook in the reference frame;
- L1' = length between the axis of rotation between the central frame and the subframe in the reference frame and the origin of the angle c;
- L1 = length between the origins of the angles c and b;
- L2 = length between the origin of the angle b and the center of the hook.

FIG. 1

FIG. 2

EP 3 626 530 B1

**FIG. 3**

**FIG. 4**

EP 3 626 530 B1

FIG. 5

FIG. 6

FIG. 7

# FIG. 8

**FIG. 9**

**FIG. 10**

E0'

E1'

E2'

EP 3 626 530 B1

**FIG. 11**

EP 3 626 530 B1

**FIG. 12**

EP 3 626 530 B1

**FIG. 13**

**FIG. 14**

EP 3 626 530 B1

**FIG. 15**

FIG. 16

**RÉFÉRENCES CITÉES DANS LA DESCRIPTION**

**Documents brevets cités dans la description**

- WO 2017108764 A1
- US 2011196623 A1
- EP 3141420 A1